(19) Europäisches Patentamt / European Patent Office / Office européen des brevets

(11) **EP 3 125 401 B1**

(12) **EUROPÄISCHE PATENTSCHRIFT**

(45) Veröffentlichungstag und Bekanntmachung des Hinweises auf die Patenterteilung:
**29.11.2023  Patentblatt 2023/48**

(21) Anmeldenummer: **16177857.6**

(22) Anmeldetag: **04.07.2016**

(51) Internationale Patentklassifikation (IPC):
**H02J 11/00** *(2006.01)*   **H02J 3/38** *(2006.01)*

(52) Gemeinsame Patentklassifikation (CPC):
**H02J 11/00; H02J 3/381;** H02J 2300/28;
Y02E 10/76

(54) **WINDENERGIEANLAGE MIT SPANNUNGSGEREGELTER EIGENBEDARFSVERSORGUNG**

WIND TURBINE WITH VOLTAGE-CONTROLLED INTERNAL REQUIREMENTS POWER SUPPLY

ÉOLIENNE COMPRENANT UNE ALIMENTATION D'AUTOCONSOMMATION A TENSION REGULEE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2015  DE 102015009741**

(43) Veröffentlichungstag der Anmeldung:
**01.02.2017  Patentblatt 2017/05**

(73) Patentinhaber: **Siemens Gamesa Renewable Energy Service GmbH
20097 Hamburg (DE)**

(72) Erfinder:
• **Letas, Heinz-Hermann
24796 Bovenau (DE)**
• **Engelhardt, Reinhard
37199 Wulften (DE)**

(74) Vertreter: **Glawe, Delfs, Moll
Partnerschaft mbB von
Patent- und Rechtsanwälten
Postfach 13 03 91
20103 Hamburg (DE)**

(56) Entgegenhaltungen:
EP-A1- 2 645 530       EP-A2- 2 647 839
DE-A1-102013 206 241   US-A1- 2009 021 963

**Beschreibung**

Die Erfindung betrifft eine Windenergieanlage mit einem Windrotor, einem davon angetriebenen Generator zur Erzeugung elektrischer Leistung und einer Anschlussleitung zur Abgabe der elektrischen Leistung an ein Netz, weiter umfassend ein Eigenbedarfsnetz zur Versorgung elektrische betriebener Komponenten der Windenergieanlagen und einer Eigenbedarfssteuerung zur Steuerung der Spannung im Eigenbedarfsnetz.

Moderne Windenergieanlagen benötigen zur effizienten Erzeugung elektrischer Leistung eine Vielzahl von Komponenten, die im Betrieb die effiziente Erzeugung elektrischer Leistung unterstützen. Dazu gehört insbesondere bei der üblichen Bauart mit horizontaler Rotorwelle eine Azimutverstelleinrichtung zur Ausrichtung der Windenergieanlage in die jeweilige Windrichtung. Ferner gehören hierzu Einrichtungen zum Schutz der Windenergieanlage vor schädlicher Vereisung, insbesondere eine Blattheizungseinrichtung, sowie eine Betriebssteuerung, welche die Komponenten der Windenergieanlage überwacht und deren Betrieb steuert. Ferner dient sie zur Durchführung erforderlicher Kommunikation mit übergeordneten Einheiten, wie insbesondere einem Windparkmaster und/oder einer Leitstelle des Netzbetreibers (insbesondere des Übertragungsnetzes). Die zur Versorgung all dieser Komponenten erforderliche elektrische Leistung wird als Eigenbedarf bezeichnet.

Üblicherweise wird die für den Betrieb dieser Komponenten erforderliche elektrische Leistung aus demjenigen Leistungskreis gespeist, in den die Windenergieanlage die von ihr erzeugte elektrische Leistung abgibt. Auf diese Weise kann sich die Windenergieanlage selbst mit der benötigten elektrischen Leistung für den Eigenbedarf versorgen. Praktisch wird dies meist so ausgeführt, dass die Leistung für den Eigenbedarf entnommen wird von der Anschlussleistung, über welche die Windenergieanlage mit dem Netz verbunden ist. Dies hat den zusätzlichen Vorteil, dass auch im Fall eines Nichtbetriebs der Windenergieanlage die für den Eigenbedarf erforderliche elektrische Leistung bezogen werden kann, nämlich in diesem Fall aus dem Netz. Um die Versorgung der eigenen Komponenten mit einem möglichst vorgegebenen Spannungsniveau zu gewährleisten, ist eine Eigenbedarfssteuerung vorgesehen. Dazu ist bekannt, einen Transformator zum Übertragen von elektrischer Leistung aus den Leistungskreis in das Netz für den Eigenbedarf vorzusehen. Transformatoren haben bekanntlich ein festes Spannungsübersetzungsverhältnis. Dies kann ungünstig sein, da die Spannungstoleranz im Versorgungsnetz bzw. an der Anschlussstelle im Leistungskreis der Windenergieanlage deutlich höher ist als die zulässige Toleranz im Eigenbedarfsnetz. Es ist daher erforderlich, Spannungsschwankungen, wie sie aufgrund der recht großen Toleranzen in dem Leistungskreis auftreten können, für das Eigenbedarfsnetz auf ein geringeres Maß zu reduzieren.

Es ist bekannt, zum Ausgleich von Spannungsschwankungen im Versorgungsnetz die Versorgung des Eigenbedarfsnetzes über einen Stelltransformators zu bewirken. Auf diese Weise kann eine stufenweise Anpassung an die Netzspannung erfolgen. Dies weist jedoch den Nachteil auf, dass ein derartiger Stelltransformator eine recht große Reaktionszeit aufweist. Damit ist keine ausreichend schnelle Reaktion auf dynamische Spannungsänderungen möglich, wie sie insbesondere im Fall von plötzlich im Netz auftretenden Überspannungen auftreten können, wobei anforderungsgemäß die Windenergieanlage hierbei zumindest zeitweise am Netz zu verbleiben hat (sogenannter Over Voltage Ride Through - OVRT). Um den Spannungsbereich zu erweitern, ist es bekannt (DE 10 2013 206 241 A1), zusätzlich in der Anschlussleitung der Windenergieanlage einen Spannungsexpander vorzusehen. Dieser umfasst einen zusätzlichen Transformator, dessen Primärwicklung umschaltbar ausgeführt und dessen Sekundärwicklung in die Anschlussleitung eingeschleift ist. Auf diese Weise kann die Einspeisung in das Netz über einen größeren Netzspannungsbereich erfolgen.

Es ist ferner bekannt, zu diesem Zweck zur Versorgung des Eigenbedarfsnetzes einen Spartransformator vorzusehen. Dieser ist hierbei so geschaltet, dass an dessen Hauptwicklungsanschluss die elektrische Leistung mit voller Spannung und - bei Spannungsschwankungen - somit auch mit vollem Spannungshub eingespeist wird. Der andere Anschluss der Hauptwicklung ist an einen Wechselrichter angeschlossen, der eine an sich frei wählbare Spannung ausgeben kann. Die Hauptwicklung des Spartransformators ist unterteilt in eine größere Hauptinduktivität und eine kleinere Steuerinduktivität, getrennt durch einen Zwischenabgriff. An diesem Zwischenabgriff ist das Eigenbedarfsnetz angeschlossen. Abhängig von der mittels des Wechselrichters am zweiten Anschluss der Hauptwicklung eingestellten Spannungsniveaus, kann somit die Spannung am Zwischenabgriff variiert werden, und zwar stufenlos in einem Bereich von etwa 20% unterhalb der Eingangsspannung bis auf etwa 20% von oberhalb der Eingangsspannung. Dies gilt jedenfalls dann, wenn die bei praktisch ausgeführten Eigenbedarfsversorgungen wie dieser Art das Wicklungsverhältnis zwischen Hauptinduktivität einerseits und Steuerinduktivität andererseits etwa 4:1 beträgt.

Damit bietet diese Technik zwar den Vorteil einer hohen Variabilität, jedoch wird dies mit hohem Aufwand erkauft. Denn zum einen ist für die Steuerung der Ausgangsspannung ein am zweiten Anschluss der Hauptinduktivität angeschlossener eigener Wechselrichter erforderlich; dies bedingt erheblichen Zusatzaufwand. Zum anderen fließt im Normalbetrieb die gesamte Leistung durch die Hauptinduktivität, was zu entsprechenden Verlusten führt. Kurz gesagt verlangt diese Technik also hohen Installationsaufwand und verursacht zusätzlich recht hohen Aufwand im Betrieb.

Eine alternative Art der Versorgung ohne Transformator unter Verwendung eines überbrückbaren Wechselrichters ist bekannt aus US 2009/021963 A1. Im Normalbetrieb ist der Wechselrichter überbrückt mittels einer Bypassleitung, in der ein Schalter angeordnet ist. Im Störfall, insbesondere bei übermäßiger Spannungsabweichung erfolgt die Versorgung über den Wechselrichter. Hierzu ist der Schalter in der Überbrückungsleitung zu öffnen. Eine Schwierigkeit liegt darin, das Abschalten ausreichend schnell zu bewirken. Es ist zwar bereits bekannt gewesen, durch Verwendung von IGBT als aktives Schaltelement ein schnelles Einschalten sowie ein schnelles Ausschalten zu ermöglichen, jedoch sind IGBT nicht hinreichend robust zur Verwendung in einer Umschalteinrichtung für eine Eigenbedarfsteuerung. Ein Ersatz der IGBT durch robustere Thyristor-Schalter ist zwar möglich, und kann auch ein hinreichendes Einschalten erreichen, jedoch kann mit dem Thyristor-Schalter kein hinreichend schnelles Ausschalten erreicht werden. Damit kann ein schnelles Ausschalten und damit Schutz des Eigenbedarfsnetzes nicht gesichert werden.

Aufgabe der Erfindung ist die Eigenbedarfssteuerung und deren Versorgung für Windenergieanlagen der eingangs genannten Art dahingehen zu verbessern, dass die genannten Nachteile vermieden beziehungsweise verringert werden, insbesondere einen besseren Schutz des Eigenbedarfsnetzes vor schädlicher Überspannung zu erreichen.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem davon angetrieben Generator zur Erzeugung elektrischer Leistung und einer Anschlussleitung zur Abgabe der elektrischen Leistung an ein Netz, weiter umfassend ein Eigenbedarfsnetz zur Versorgung elektrisch betriebener Komponenten der Windenergieanlage und einer Eigenbedarfssteuerung zur Steuerung der Spannung im Eigenbedarfsnetz, wobei die Eigenbedarfssteuerung eine Umschalteinrichtung aufweist, die dazu ausgebildet ist zwischen einer Normalversorgung, die an die Anschlussleitung angeschlossen ist, und einer Störfallversorgung umzuschalten, ist erfindungsgemäß vorgesehen, dass die Störfallversorgung mit einer gegenüber der Normalversorgung reduzierter Spannung speist, wobei ein Transformator zur Versorgung des Eigenbedarfsnetzes vorgesehen ist, wobei die Umschalteinrichtung in Doppelkonfiguration ein aktives Schaltelement, das als ein zuschaltendes Glied fungiert, und eine Induktivität als ein wegschaltendes Glied aufweist, das als ein passives Bauelement ausgeführt ist, wobei im Normalbetrieb das zuschaltende Glied abgeschaltet ist und Leistungsfluss über das passive Bauelement erfolgt, und wobei der Störbetrieb ein Überspannungsstörfall ist und das zuschaltende Glied eingeschaltet ist und das passive Bauelement parallel zum Transformator geschaltet ist.

Die Erfindung erstreckt sich ferner auf eine entsprechende Eigenbedarfssteuerung für das Eigenbedarfsnetz einer Windenergieanlage.

Nachfolgend seien zuerst einige verwendete Begriffe erläutert:
Unter einem aktiven Schaltelement wird vorliegend ein nichtmechanischer Schalter verstanden, vorzugsweise ein Halbleiterschalter. Derartige Schalter weisen Schaltgeschwindigkeiten auf, die beträchtlich kürzer als 10 ms sind, typischerweise 1 ms oder weniger.

Unter einem passiven Bauelement wird ein Bauelement verstanden, welches nicht aktiv schaltend ist. Dieses Bauelement wechselt also nicht aktiv zwischen zwei (oder mehr) Schaltzuständen. Es handelt sich also weder um einen elektronischen Schalter noch um einen mechanischen Schalter. Im Sinne der vorliegenden Anmeldung ist das passive Bauelement eine Induktivität.

Der Kern der Erfindung liegt in dem Aspekt, die Umschalteinrichtung in einer Semi-Bauweise auszuführen, wobei nur eines der Bauelemente ein aktives elektrisches Schaltelement ist und das andere gerade eben nicht. Verblüffenderweise wird dadurch, dass eines der beiden Bauelemente der Umschalteinrichtung als ein passives Bauelement, nämlich eine Induktivität ausgeführt ist, eine Verbesserung des Schaltverhaltens erreicht. Damit kann eine verbesserte Umschalteinrichtung realisiert werden, die einerseits sowohl robust (insbesondere gegenüber Überspannungseinwirkung) und andererseits auch schnell genug ist. Schnell genug ist die Umschalteinrichtung nicht nur dann wenn sie schnell einschaltet, sondern sie muss jedenfalls funktional auch zum schnellen Ausschalten befähigt sein.

Die Erfindung löst dieses Dilemma, indem die erfindungsgemäße Umschalteinrichtung in Doppelkonfiguration ein aktives Schaltelement lediglich als einschaltendes Glied vorsieht, und das ausschaltende Glied durch ein passives Bauelement ersetzt, nämlich eine Induktivität. Damit kann auf verblüffend einfacher Weise die Ausschaltproblematik von aktiven Schaltelementen, die robust genug für die Verwendung in einer Überspannungsfesten Eigenbedarfssteuerung sind, vermieden werden. Vorzugsweise ist dabei als Induktivität eine Drossel vorgesehen. Es ergibt sich somit, dass erfindungsgemäß in Normalbetrieb das zuschaltende Glied abgeschaltet ist und der Leistungsfluss über das wegschaltende Glied, also über die Drossel, erfolgt. Die Drossel ist auf diese Weise in Reihe geschaltet. Da die Drossel definitionsgemäß keine ohmsche Last ist, ergibt dies somit nur eine geringe Verlustleistung, da der durch die Drossel bewirkte Spannungsabfall quer zum Stromflussvektor steht. Somit stört die Drossel im Normalbetrieb praktisch nicht.

An die Umschalteinrichtung angeschlossen ist ein Transformator zur Versorgung des Eigenbedarfsnetzes. Dabei wird dann im Störbetrieb, wenn ein Überspannungsstörfall vorliegt, das zuschaltende Glied betätigt und somit eingeschaltet, wodurch die Induktivität (Drossel) nunmehr parallel zum Transformator geschaltet ist. Auf diese Weise wird erreicht, dass der Transformator mit der Versorgung der reduzierten Spannung schnell zugeschaltet ist, und dass die nunmehr parallel liegende Induktivität (Drossel) einen hohen Blindstrom bewirkt. Auf diese Weise ergibt sich eine wirksame Spannungsreduzierung für die Versorgung des Eigenbedarfsnetzes.

Indem erfindungsgemäß das ausschaltende Glied durch eine Induktivität als passives Bauelement, insbesondere durch die Drossel, ersetzt ist, wird ein aktives Ausschalten nicht mehr benötigt. Somit kommt es dank der Erfindung auf die Schaltdynamik beim Ausschalten überhaupt nicht mehr an. Somit können erfindungsgemäß zwar robuste aber langsam ausschaltende Elemente als aktives Schaltelement vorgesehen sein.

Die Erfindung erreicht auf diese Weise, dass nur noch ein aktiv schaltendes Element erforderlich ist, welches nur noch schnell einzuschalten braucht. Das zweite Schaltelement, nämlich dasjenige das auszuschalten hat, ist erfindungsgemäß ersetzt durch das passive Bauelement in Gestalt der Induktivität, insbesondere der Drossel. Auf diese Weise ist ein schnelles Umschalten in den Störfallbetrieb mit reduzierter Spannungsversorgung gesichert.

Der Erfindung gelingt damit die Zusammenführung zweier gegensätzlich erscheinende Eigenschaften, nämlich hoher Robustheit einerseits und hohe Schaltgeschwindigkeit andererseits. Zudem bietet die Erfindung den Vorteil großer konzeptioneller Einfachheit und damit Störsicherheit.

Vorzugsweise ist der Transformator als ein Spartransformator ausgeführt. Damit wird eine sowohl hinsichtlich des Herstellungsaufwands wie auch hinsichtlich des Aufwands zur Baugröße optimierte Versorgung des Eigenbedarfsnetzes erreicht. Die bei Spartransformatoren fehlende galvanische Trennung zwischen Primär- und Sekundärseite stellt im Kontext der vorliegenden Erfindung keinen Nachteil dar, so dass die Verwendung eines Spartransformators vorzugswürdig ist.

Gemäß einem besonders vorteilhaften Aspekt der Erfindung, der gegebenenfalls unabhängigen Schutz verdient, ist zur Versorgung des Eigenbedarfsnetzes als Transformator ein Drosseltransformator vorgesehen. Solch ein Drosseltransformator zeichnet sich dadurch aus, dass in dessen Transformatorwicklung eine parallelgeschaltete Drossel integriert ist. Auf diese Weise ist eine besonders kompakte Ausführung der ansonsten getrennten Einheiten (Spar-) Transformator einerseits und Drossel andererseits ermöglicht.

Mit Vorteil ist hierbei der Kern des (Spar-)Transformators geschlitzt ausgeführt. Auf dieser Weise sind Luftspalte gebildet, wodurch der magnetische Widerstand des Transformatorkerns verringert ist. Im Ergebnis ist damit die Hauptinduktivität des Transformators reduziert in Bezug auf die Gesamtinduktivität, welche sich durch die Parallelschaltung von Transformator und Drossel ergibt. Damit ergibt sich eine besonders einfache Ausführungsart für den Drosseltransformator.

Zweckmäßigerweise ist das aktive Schaltelement der Umschalteinrichtung so geschaltet, dass es im Steuerkreis des Transformators angeordnet ist. Unter einem Steuerkreis wird derjenige Kreis verstanden, welcher nicht im eigentlichen Hauptleistungspfad liegt. Dadurch wird eine unnötige hohe Strombelastung des aktiven Schaltelements vermieden. Ferner erlaubt es die Anordnung des aktiven Schaltelements im Steuerpfad, dass die somit von dem Schaltelement betätigte Steuerinduktivität größer ausgeführt sein kann als die eigentliche Hauptinduktivität. Dies stellt eine Umkehrung der bisher üblichen, mithin konventionellen Anordnung dar. Indem nur die betragsmäßig kleinere Hauptinduktivität im Leistungspfad liegt, wird eine Verringerung der induktiven Verluste im Normalbetrieb erreicht. Dies ist im Stand der Technik ohne Beispiel, welcher üblicherweise eine Anordnung der größeren Induktivität im Hauptleistungspfad vorsah. Mit Vorteil ist das aktive Schaltelement hierbei so angeordnet, dass es - bezogen auf ein einphasiges Ersatzschaltbild - einen Anschluss des (Spar-)Transformators auf ein Neutralleiter-Niveau schaltet; es versteht sich, dass bei einem Mehrphasensystem, insbesondere einem Dreiphasensystem, verschiedene alternative Schaltgruppen möglich sind und kein Neutralleiter benötigt wird. Dabei kann auf besonders einfache Weise ein schnelles Einschalten des (Spar-)Transformators bewirkt und so die gewünschte Spannungsreduktion mit hoher Dynamik erreicht werden, und zwar bei geringstem schaltungstechnischen Aufwand. Unter dem Neutralleiter-Niveau wird hierbei ein Festniveau verstanden, welches vorzugsweise einem Nullspannungsniveau entspricht. Es ist streng zu unterscheiden von einem variablen Spannungsniveau, wie es beispielsweise durch einen Wechselrichter gemäß dem Stand der Technik frei nach beliebiger Vorgabe einstellbar ist.

Vorzugsweise sind in einem Mehrphasensystem die aktiven Schaltelemente so angeordnet, dass sie eine Sternschaltung auf einen Sternpunkt oder zu einer Dreiecksschaltung zwischen den Phasen bilden.

Vorzugsweise ist der elektrische Schalter als ein Thyristor-Schalter ausgeführt. Dieser bieten den Vorzug hoher Robustheit, insbesondere gegenüber Spannungen und preiswerter Verfügbarkeit. Sie bieten damit einen beträchtlichen Vorteil gegenüber den bekannten IGBT-Schaltern. Mit Thyristoren als Schaltelementen ist in der Regel eine kurzschlussfeste Ausführung problemlos. Ein Nachteil der Thyristoren als Schalter besteht zwar darin, dass sie nur bei einem Null-Durchgang der Spannung ausgeschaltet werden können (sog. natürliche Kommutierung), mithin also ein schnelles Umschalten unter aktivem Ausschalten des einen der Thyristoren nicht realisierbar ist. Dank der erfindungsgemäßen Semi-Konfiguration, bei welcher das aktive Schaltelement aber nur zum Einschalten verwenden wird, und der Ausschalter durch ein passives Bauelement ersetzt wird, kommt dieser Nachteil aber nicht zum Tragen. Damit eröffnet die Erfindung auf frappierend elegante Weise die Verwendung von Thyristor-Schaltern als robuste Schaltelemente zum schnellen Umschalten für die Eigenbedarfsversorgung von Windenergieanlagen.

Bei mehrphasigen Eigenbedarfsnetzen kann im Grundsatz für jede Phase eine eigene Umschalteinrichtung vorgesehen sein. Bevorzugt ist es aber, weniger Umschalteinrichtungen als Phasen vorzusehen. So kann die Anzahl der Schaltelemente reduziert sein. Bewährt hat es sich insbesondere, wenn bei einem dreiphasigen System nur zwei Umschalteinrichtungen vorgesehen sind, und die dritte Phase ohne Umschalteinrichtung ausgeführt ist. Damit kann die Zahl der Schaltelemente um ein Drittel reduziert sein. Bei einer weiteren, besonders bewährten Ausführungsform sind die einzelnen Phasen nicht gegenüber dem Nullleiter, sondern gegeneinander geschaltet. Dann genügt es, nur so viele Schaltelemente vorzusehen, wie Phasen vorhanden sind, wobei die Schaltelemente einen die einzelnen Phasenstränge verbindenden Ring bilden (ohne Einbeziehung des Nullleiters). Damit kann die Zahl der Schaltelemente halbiert sein.

Zweckmäßigerweise ist die Drossel so dimensioniert, dass die Umschalteinrichtung kurzschlussfest ist (in der Regel bedeutet dies, dass die Drossel entsprechend ∫i²dt im Kurzschlussfall dimensioniert ist). Mit Vorteil ist weiter ein Überspannungsdetektor vorgesehen, welcher eine Spannung über das aktive Schaltelement bestimmt und bei Überschreiten eines einstellbaren, kritischen Grenzwerts das Schaltelement aktiviert, sodass es durchschaltet. Mittels des Spannungsdetektors kann somit das aktive Schaltelement gegen schädliche Überlast aufgrund eines zu hohen Spannungsabfalls über dem Schaltelement abgesichert werden. Damit kann ein Eigenschutz des Schaltelements erreicht werden. Dies ist insbesondere bei einer Verwendung von Thyristoren für das aktive Schaltelement ein beträchtlicher Vorteil. Das gilt vor allem dann, wenn in einem Kurzschlussfall höhere Spannungen am Thyristor entstehen, als er verkraftet.

Zur Bestimmung der Spannung im Netz und dem Eigenbedarfsnetz kann vorzugsweise zur schnellen Erfassung eine Spannungsmessung mittels Spannungszeigermessung vorgesehen sein. Sie ist näher beschrieben in einer parallel anhängigen Anmeldung der Anmelderin. Auf diese Weise kann eine besonders schnell wirksame und damit effiziente Überspannungserkennung und somit Umschaltung erreicht werden, sodass das Eigenbedarfsnetz besonders wirksam vor schädlicher Überspannungswirkung geschützt ist.

Die Erfindung wird nachfolgend mit Bezug auf die beigefügte Zeichnung näher erläutert anhand eines vorteilhaften Ausführungsbeispiels. In der Zeichnung zeigen:

Fig. 1    ein schematisches Blockdiagramm für eine Windenergieanlage gemäß einem Ausführungsbeispiel der Erfindung;

Fig. 2    ein einphasiges Ersatzschaltbild für einen Transformator mit einer Umschalteinrichtung gemäß der Erfindung;

Fig. 3    eine alternative Anordnung mit einem Drosseltransformator;

Fig. 4 a, b    einphasige Ersatzschaltbilder zur Berechnung einer Ersatzinduktivität;

Fig. 5    einen Drosseltransformator für eine MehrphasenKonfiguration;

Fig. 6 a-c    alternative Ausführungsformen für die Schalteinrichtung bei einer Mehrphasen-Konfiguration;

Fig. 7    eine Darstellung eines Kerns für einen Drosseltransformator in Mehrphasen-Konfiguration;

Fig. 8 a-g:    Diagramme für das Schaltverhalten bei einer Überspannungssituation im Nennleistungsbereich;

Fig. 9 a-g:    Diagramme für das Schaltverhalten bei einem Kurzschluss; und

Fig. 10:    ein Beispiel für ein Schaltelement gemäß dem Stand der Technik.

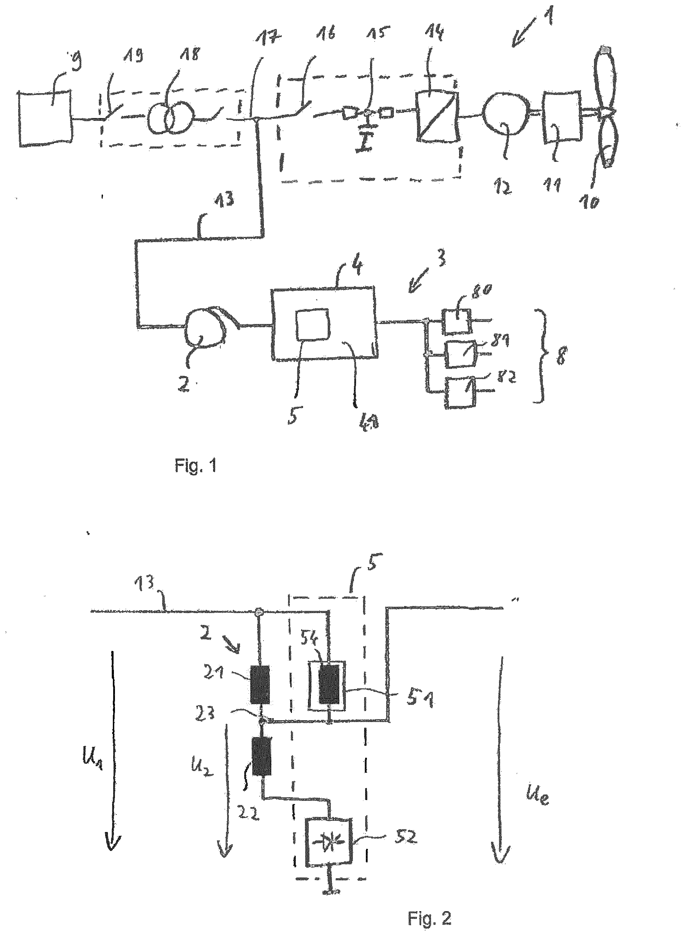

Eine in ihrer Gesamtheit mit der Bezugsziffer 1 bezeichnete Windenergieanlage ist als funktionelles Blockdiagramm in Figur 1 dargestellt. Sie umfasst einen Windrotor 10, der über ein optionales Getriebe 11 einen Generator 12 antreibt. Der Generator 12 kann als ein Synchrongenerator oder Asynchrongenerator ausgeführt sein. Die von dem Generator 12 erzeugte elektrische Leistung wird einem Umrichter 14 zugeführt, der sie über ein Netzfilter 15 und einem Leistungsschalter 16 an eine Anschlussleitung 17 der Windenergieanlage 1 abgibt. In dem dargestellten Ausführungsbeispiel handelt es sich bei dem Umrichter 14 um einen Vollumrichter; dies ist nicht zwingend, so kann es sich bei einer Ausführung des Generators 12 als doppelt gespeiste Asynchron Maschine bei dem Umrichter 14 auch lediglich um einen Teilumrichter handeln. An der Anschlussleitung 17 ist ein Mittelspannungstransformator 18 der Windenergieanlage (sogenannte Anlagentransformator) und ein Trennschütz 19 zur Herstellung einer Verbindung an ein Netz 9 (parkinternes Netz oder Übertragungsnetz) angeordnet.

Zur Gewährleistung eines ordnungsgemäßen Betriebs umfasst die Windenergieanlage 1 eine Mehrzahl von elektrisch betriebenen Komponenten 8. Hierbei kann es sich beispielsweise um eine Betriebssteuerung 80, eine Azimutverstellung 81 für eine Gondel der Windenergieanlage 1, um eine Rotorblattverstelleinheit 82 zur Verstellung des Anstellwinkels von Rotorblättern des Windrotors 18 handeln etc. Zur Versorgung der Komponenten mit elektrischer Leistung ist ein Eigenbedarfsnetz 3 vorgesehen. Es wird gespeist über eine Speiseleitung 13 welche an die Anschlussleitung 17 angeschlossen ist. Die Speiseleitung 13 führt zu einem optionalen Spartransformator 2 des Eigenbedarfsnetzes 3. Zur Spannungshaltung im Eigenbedarfsnetz 3 ist eine Eigenbedarfsteuerung 4 vorgesehen. Sie umfasst einen dynamischer Überspannungsbegrenzer 41, der zum Schutz vor Überspannungen in dem dargestellten Ausführungsbeispiel bis hin zu beispielsweise 145% der nominalen Spannung ausgebildet ist. Dem kann optional ein mehrstufiger stationärer Spannungsverminderer (nicht dargestellt) vorgeschaltet sein, bei welchem durch selektiver Anwahl der Stufen jeweils eine fünfprozentige Variation der Spannung im Eigenbedarfsnetz einstellbar ist.

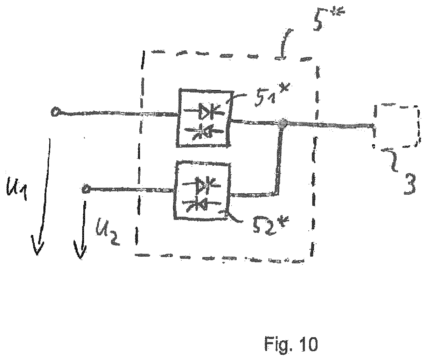

Ein Prinzipschaltbild für eine Ausführungsform des Überspannungsbegrenzers ist in Figur 10 dargestellt. Demnach umfasst der Überspannungsbegrenzer zum einen ein Anschluss für eine Normalversorgung $U_1$, wie sie von der Speiseleitung 13 bereit gestellt ist. Ferner umfasst sie einen Anschluss für eine Störfallversorgung, bei welchem eine Versorgung mit einer gegenüber der Normalversorgung $U_1$ reduzierten Spannung $U_2$ angelegt ist. Es ist eine Umschalteinrichtung 5* vorgesehen, die zwei Schaltelemente 51* und 52* umfasst. Diese sind von einer Steuerschaltung (nicht dargestellt) derart angesteuert, dass sie gegensinnig schalten. Im Normalbetrieb ist das Schaltelement 51* eingeschaltet und das Schaltelement 52* ausgeschaltet. Dann entspricht die im Eigenbedarfsnetz 3 an den Komponenten 8 wirksame Spannung derjenigen, wie am Anschluss für den Normalbetrieb von dem Spartransformator bereit gestellt ist. In einem Störfallszenario steigt die Spannung im Übertragungsnetz 9 und in der Folge auch in der Anschlussleitung 17 und der dran angeschlossenen Speiseleitung 13 und somit auch die Spannung $U_1$ erheblich an. Insbesondere bei Überspannung mit hoher Dynamik kann es hierbei zu einer kritischen Überspannung auch im Eigenbedarfsnetz kommen. Zum Schutz der Komponenten 8 ist nun vorgesehen, dass die Umschalteinrichtung 5* auf die Störfallversorgung mit reduzierter Spannung $U_2$ umschaltet, wie sie beispielsweise von einem Spartransformator 2 abgegeben wird. Dazu wird das Schaltelement 51* ausgeschaltet und das Schaltelement 52* eingeschaltet.

Während das Grundprinzip dieser Umschalteinrichtung keine Schwierigkeiten aufwirft, so gilt das nicht für die praktische Ausführung. Denn die im Stand der Technik bekannten IGBT-Schaltelemente ermöglichen zwar ein hinreichend schnelles Umschalten, jedoch sind sie in der Praxis nicht robust genug gegenüber den durch das Auftreten von Überspannung auftretenden Belastungen. Bei einer alternativen Verwendung von Thyristoren für die beiden Schaltelemente 51* und 52* gäbe es zwar der Vorteil, dass diese hinreichend robust sind, jedoch ist deren Schaltverhalten insbesondere hinsichtlich des Ausschaltens nicht schnell genug (was im Fall des Schaltelements 51* zeitkritisch ist) .

Eine verbesserte Umschalteinrichtung 5 gemäß einem Ausführungsbeispiel der Erfindung ist in Figur 2 dargestellt. Über die Speiseleitung 13 wird im Normalbetrieb die von der Anschlussleitung 17 abgegriffene Leistung zur Versorgung des Eigenbedarfsnetzes 3 mit seinen Komponenten 8 zugeführt. Diese Spannung ist als $U_1$ bezeichnet. Für die Versorgung in einem Störfall ist der Spartransformator 2 vorgesehen, der eine erste Wicklung 21 und eine zweite Wicklung 22 mit einem Zwischenabgriff 23 umfasst. Über den Zwischenabgriff 23 wird eine Spannung abgenommen, deren Höhe sich aus dem Wicklungsverhältnis der ersten und zweiten Wicklung 21,22 bestimmt. Weist die erste Wicklung 21 eine Wicklungsanzahl $w_1$ und zweite Wicklung 22 eine Wicklungsanzahl $w_2$ auf, so ist die Spannung $U_2$:

$$U_2 = \frac{W_2}{W_1 + W_2} * U_1$$

Beispielhaft sei ein Wert angenommen, wonach $U_2$ etwa 85% von $U_1$ ist. Angelegt sind die Spannungen $U_1$ für die Normalversorgung und die Spannung U2 für die Störfallversorgung an die Schalteinrichtung 51 beziehungsweise 52. Im Normalbetrieb ist die Schalteinrichtung 51 eingeschaltet und die Schalteinrichtung 52 ausgeschaltet.

Bei der erfindungsgemäßen Ausführungsform der Umschalteinrichtung ist ausschließlich das zuschaltende Glied 52 als ein aktives Schaltelement ausgeführt, während das in einem Störfall wegschaltende Glied 51 als ein passives Bauelement ausgeführt ist, nämlich als eine Drossel 54. Es ist mithin nur noch ein aktives Schaltelement vorhanden, während das andere durch ein passives Bauelement ersetzt ist. Damit ergibt sich im Normalbetrieb ein Leistungsfluss, bei dem die Spannung $U_1$ über die Drossel 54 fließt und mit einem nur geringfügigen Spannungsabfall über der Drossel 54 als Abgabespannung $U_e$ an das Eigenbedarfsnetz 3 ausgegeben wird. Der sich über die Drossel 54 ergebende Spannungsabfall ist von der Strombelastung aufgrund der Leistungsbedarfs der Komponenten 8 abhängig, wirkt sich jedoch wegen der vektoriellen Addition aufgrund der Ausführung der Drossel 54 als rein induktive Last nur geringfügig auf den Betrag der Spannung $U_e$ aus. Die Schalteinrichtung 52 ist im Normalbetrieb geöffnet, so dass weder durch sie noch durch die Wicklung 22 des Spartransformators 2 Leistung fließt.

Im Störfall hingegen schaltet die Schalteinrichtung 52 ein, sodass nunmehr Leistung sowohl durch die Wicklung 21 wie auch die Wicklung 22 des Spartransformators 2 und die Schalteinrichtung 52 fließt. Am Abgriff 23 stellt sich nunmehr eine Spannung ein, die durch das Wicklungsverhältnis der beiden Wicklungen 21, 22 bestimmt ist (vorliegend ergibt sich $U_2$ = 85% von U1). Diese Spannung wird nunmehr als Spannung $U_e$ an die Komponenten 8 des Eigenbedarfsnetzes 3 ausgegeben. Die Drossel 54 als wegschaltendes Schaltelement 51 liegt nunmehr parallel zur Wicklung 21 des Spartransformators 2. Es ist daher erfindungsgemäß nicht erforderlich, dass der Leistungsfluss durch die Drossel 54 aktiv abgeschaltet ist. Somit ist das Zeitverhalten der Umschalteinrichtung 5 gemäß der Erfindung allein bestimmt durch die Einschaltzeit der Schalteinrichtung 52.

Diese ist bei der Ausführung mit Thyristoren als aktives Element kurz. Somit ist ein schnelles Umschalten in den Störfallbetrieb gewährleistet. Die Versorgung des Eigenbedarfsnetzes erfolgt dann mit einer Spannungsreduzierung, deren Höhe durch das Wicklungsverhältnis der Wicklungen 21, 22 des Spartransformators 2 vorgegeben ist. Damit ist ein wirksamer Schutz des Eigenbedarfsnetzes 3 vor schädlicher Überspannung, insbesondere dynamisch auftretende Überspannung, gewährleistet.

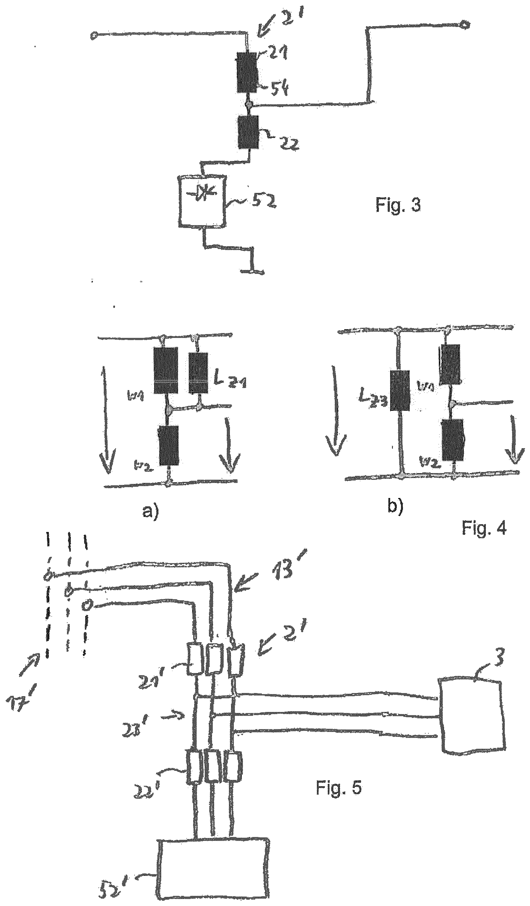

Bei einer bevorzugten alternativen Ausführungsform, wie sie in Figur 3 dargestellt ist, ist die Drossel 54 kombiniert mit der ersten Wicklung 21 des Spartransformators 2. Es wird somit ein Drosseltransformator 2' gebildet. Das wegschaltende Element für die Umschalteinrichtung 5 ist somit nicht mehr als ein gesondertes Element erforderlich, sondern ist nunmehr in den Drosseltransformator 2' integriert. Als zusätzliches gesondertes Element wird nunmehr nur noch das einschaltende Schaltelement 52 benötigt. Damit wird eine hinsichtlich des Bauteileaufwands optimierte Variante für eine überspannungssichere Versorgung für das Eigenbedarfsnetz 3 erreicht.

Elektrische Ersatzschaltbilder für die beiden Varianten mit Spartransformator einerseits und Drosseltransformator andererseits sind in Figur 4a beziehungsweise Figur 4b dargestellt. Die Darstellung in Figur 4a zeigt die Verhältnisse am Spartransformator mit einer gesonderten Drossel 54. Hierbei ergibt sich der Wert für die Hauptinduktivität $L_Z$ aus der Parallelschaltung der ursprünglichen Hauptinduktivität $L_H$ und der Induktivität der Drossel 54 $L_X$, mithin also:

$$L_Z = \frac{L_X * L_H}{L_X + L_H}$$

Bei der Ausführungsform gemäß Figur 4 ist dies auch der Wert für die Ersatzinduktivität $L_{Z1}$. Bei der Ausführungsform gemäß Figur 4b sind die Verhältnisse am Drosseltransformator abgebildet. Hierbei ergibt sich für die Induktivität $L_{Z3}$ ein Wert, der sich aus dem der Hauptinduktivität $L_Z$ multipliziert mit einem Faktor aus dem Wicklungsverhältnis gemäß nachfolgender Beziehung:

$$L_{Za} = L_Z * \left(\frac{W_1 + W_2}{W_1}\right)^2$$

Ein Ausführungsbeispiel für die Ausführung mit dem Drosseltransformator gemäß Figur 3 in einer Mehrphasen-Konfiguration, nämlich bei einem Dreiphasen-Drehstromsystem, ist in Figur 5 dargestellt. Man erkennt die dreiphasig von der Anschlussleistung 17' abgegriffene Speiseleitung 13', die dem Drosseltransformator 2' zugeführt ist. Dieser weist für jede Phase jeweils eine erste Wicklung 21' und eine zweite Wicklung 22' auf. An dem Fußpunktanschluss der zweiten Wicklung 22' ist das einschaltende Schaltelement 52' der mehrphasigen Umschalteinrichtung angeordnet. An dem mehrphasigen Zwischenabgriff 23' ist das Eigenbedarfsnetz 3 angeschlossen. Die dargestellte Schaltung entspricht sinngemäß der Schaltgruppe $Y_Y$; es versteht sich, dass auch andere Schaltgruppen möglich sind.

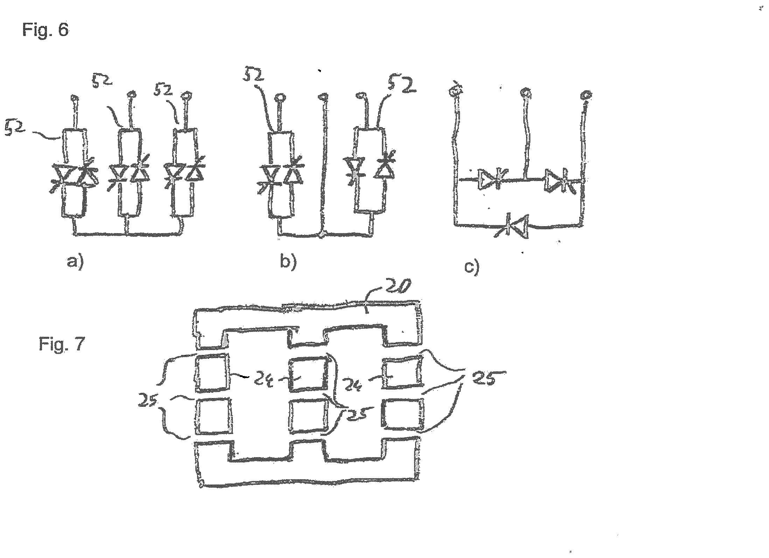

Das mehrphasige Schaltelement 52' kann auf verschiedene Weise ausgeführt sein, wie in Figur 6a, b, c beispielhaft für die Schaltgruppe $Y_Y$ des Transformators dargestellt. Vom prinzipiellen Aufbau her am einfachsten ist die Ausführung gemäß Figur 6a, bei welcher für jede Phase eine identische Thyristor-Konfiguration für die Einschalteinrichtung 52 vorgesehen ist. Eine Verringerung der Bauteileanteile um ein Drittel ergibt sich, wenn lediglich für zwei der drei Phasen eine entsprechende Thyristor-Schalteinrichtung vorgesehen ist, wie in Figur 6b dargestellt. Eine noch größere Bauteilersparnis, nämlich auf lediglich nur die Hälfte der Bauelemente ergibt sich bei der Konfiguration gemäß Figur 6c, wobei hier jeweils nur ein Thyristor-Schaltelement zwischen jeweils zwei Phasen angeordnet ist. Somit kann auch beim Mehrphasen- Konfiguration mit nur geringen Bauteilen technischer Zusatzaufwand erfindungsgemäße Umschalteinrichtung realisiert sein.

Ein Beispiel für eine praktische Ausführung des TransformatorKerns 20 eines Drosseltransformators 2' für ein Dreiphasen-Drehstromsystem ist in Figur 7 dargestellt. Man erkennt als Grundlage die übliche Bauweise eines Dreiphasen-Transformators mit drei parallel angeordneten Schenkeln 24. Bei der erfindungsgemäßen Ausführung als Drosseltransformator 2' sind in jedem der Schenkel 24 mehrere (im dargestellte Ausführungsbeispiel drei) Luftspalte eingearbeitet. Die Wirkung dieser Luftspalte 25 in den Schenkeln besteht darin, den magnetischen Widerstand zu verringern. Dadurch wird die Hauptinduktivität ausgehend von dem ursprünglichen Wert $L_H$ verringert, und zwar auf denjenigen Wert, der durch die vorgenannte Formel zu $L_Z$ bestimmt ist. Damit kann der Drosseltransformator 2' ohne zusätzlichen Bauteileaufwand kostengünstig realisiert sein.

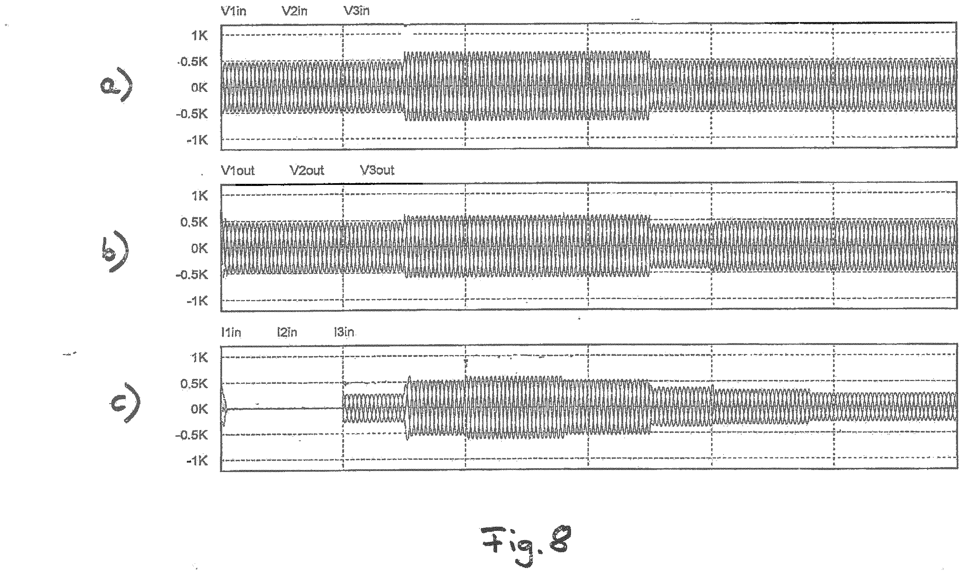

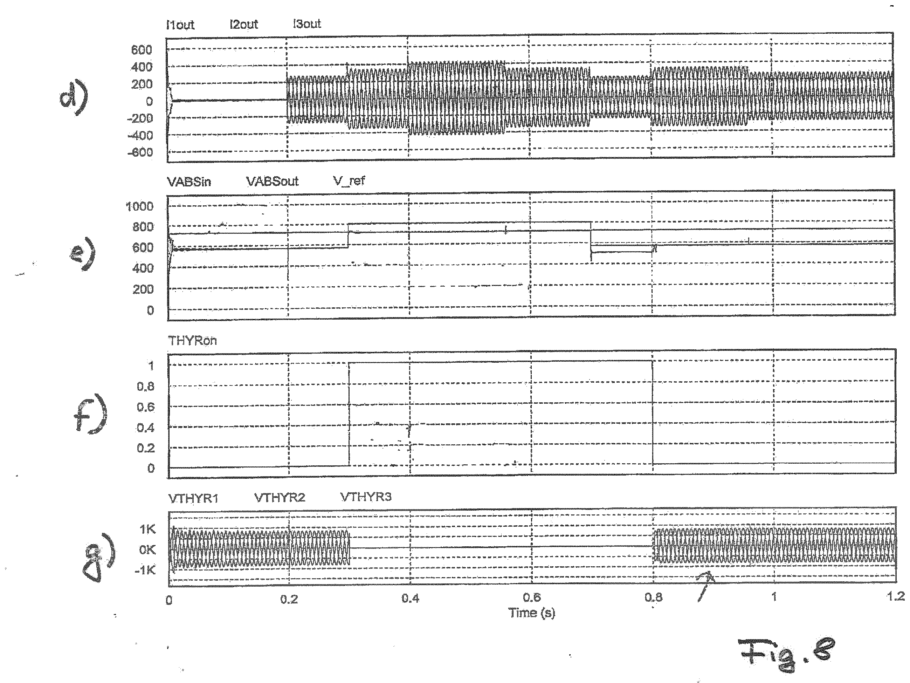

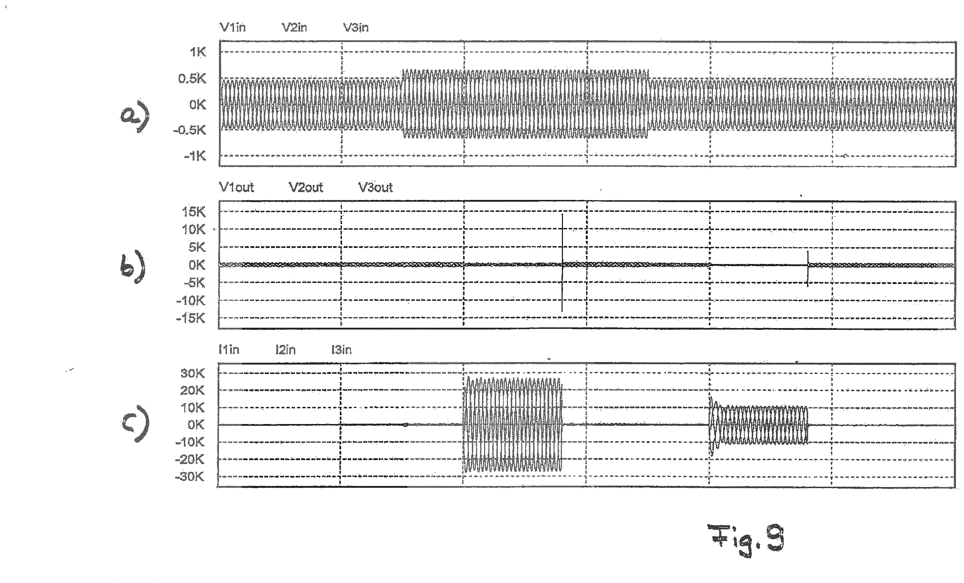

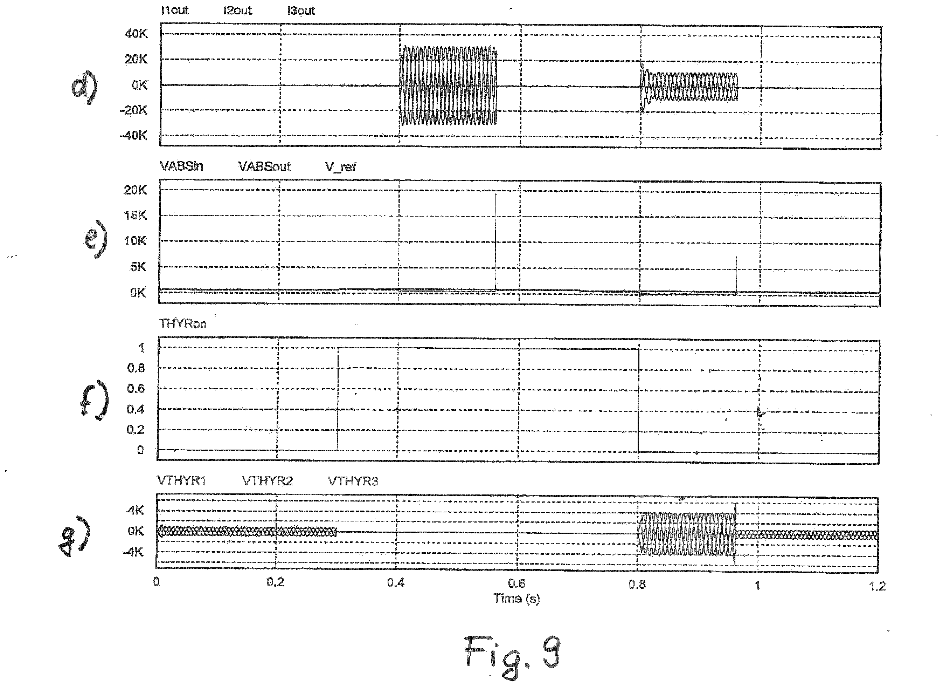

Die erfindungsgemäße Wirkung ist in den Figuren 8 und 9 dargestellt. Es wird zuerst Bezug genommen auf Figur 8, welche einen Überspannungs-Störfall zeigt. In Figur 8a ist die Spannung in der Anschlussleitung 17 beziehungsweise der Speiseleitung 13 für die drei Phasen dargestellt. Sie liegt zu Beginn auf dem Nominalwert, und zum Zeitpunkt t = 0,3 Sekunden tritt ein Überspannungs-Störfall auf, der bis zum Zeitpunkt t = 0,7 Sekunden andauert; während dieser Zeit soll die Windenergieanlage 1 am Netz bleiben (sog. Over Voltage Ride Through-OVRT). In Figur 8b ist die sich unter der Wirkung der Erfindung ergebende Ausgangsspannung zur Versorgung des Eigenbedarfsnetzes 3 dargestellt, wiederum mit den drei Phasen. Man erkennt deutlich, dass während des Zeitraums der Überspannung zwischen 0,3 Sekunden und 0,7 Sekunden zwar eine Spannungserhöhung im Eigenbedarfsnetz auftritt, diese jedoch dank der Erfindung betragsmäßig deutlich geringer ist als in der Anschlussleitung 17. In Figur 8c ist dargestellt der Stromfluss in der Speiseleitung 13. Hierbei sei bis zum Zeitpunkt t = 0,2 Sekunden angenommen, dass keine Last durch das Eigenbedarfsnetz 3 abgefordert werde (Leerlaufbetrieb). Ab dem Zeitpunkt t = 0,2 Sekunden wird jedoch Last durch das Eigenbedarfsnetz 3 angefordert. Man erkennt ferner, dass während der Zeitdauer des Überspannungs-Störfalls ein erheblicher Zusatzstrom fließt. Dieser ist bedingt durch die Zusatzlast, welche durch das Schalten der Umschalteinrichtung bewirkt ist. Der sich dabei ergebende Stromfluss in das Eigenbedarfsnetz 3 ist in Figur 8d dargestellt.

In dem Diagramm 8e ist die Spannung an der Anschlussleitung 17 als Zeiger dargestellt, welche ein Maß für die Spannung im Netz 9 bildet. Mit der gestrichelten Linie ist ein Referenzwert für kritische Überspannung visualisiert. Man erkennt, dass zum Zeitpunkt t = 0,3 Sekunden die Ist-Spannung den kritischen Referenzwert überschreitet, und dass die Überschreitung bis zum Zeitpunkt t = 0,7 Sekunden andauert. In der Folge dieser Überschreitung wird erfindungsgemäß die Umschalteinrichtung 5 betätigt, wobei die Schalteinrichtung 52 einschaltet, deren Schaltzustand im Diagramm 8f dargestellt ist. Durch das Einschalten fließt nunmehr ein Strom durch die Sekundärwicklung und durch die Schalteinrichtung 52, wodurch die an das Eigenbedarfsnetz 3 abgegebene Ausgangsspannung auf den Wert $U_2$ absinkt. Die sich während dieser Zeit im Schaltelement 52 über diesen Thyristoren (geschaltet gemäß Schaltvariante in Figur 6c) ergebenden Spannungen sind im Diagramm 8g dargestellt. Man erkennt, dass durch das Betätigen der Thyristoren die Spannung über ihnen schlagartig auf null zusammen bricht, und damit der Strom durch die Sekundärspule 22 des Spartransformators 2 fließt.

In Figur 9a-g ist das Verhalten im Fall eines Kurzschlusses dargestellt. Die einzelnen Diagramme entsprechen denjenigen in Figur 8. Wiederum besteht im Zeitraum von t = 0,3 bis t = 0,7 Sekunden ein Überspannungs-Störfall. Zusätzlich tritt zum Zeitpunkt t = 0,4 Sekunden ein bis zum Zeitpunkt t = 0,55 Sekunden andauernder Kurzschluss im Netz 9 beziehungsweise der Anschlussleitung 17 auf, wodurch sehr hohe Ströme entstehen. Ein weiterer Kurzschluss tritt im Zeitraum zwischen t = 0,8 bis t = 0,95 Sekunden, also nach dem Überspannungs-Störfall auf. Man erkennt anhand des Diagramms 9f, dass ähnlich wie bei dem Diagramm 8f die Aktivierung der Umschalteinrichtung zu Beginn des Überspannungs-Störfalls bei t = 0,3 Sekunden eintritt. Jedoch endet die Aktivierung der Umschalteinrichtung mit ihren Thyristoren nicht mit dem Ende des Überspannungs-Störfalls zum Zeitpunkt t = 0,7 Sekunden, sondern dauert an bis zum Auftreten des Kurzschlusses zum Zeitpunkt t = 0,8 Sekunden. In der Folge tritt eine Überspannung an den Thyristoren auf, wie sie in Figur 9g diagrammartig dargestellt ist. Man erkennt, dass die Thyristoren in einem solchen Fall einer erheblichen Überspannung ausgesetzt sind. Die erfindungsgemäß vorgesehenen Thyristoren halten dieser Überspannungsbelastung stand, anders als bei einer Ausführung unter Verwendung von beispielsweise IGBT, welche einer derartigen Überspannungsbelastung nicht standhalten würden. Die Erfindung erweist sich somit nicht nur als überspannungsfest, sondern auch als kurzschlussfest.

**Patentansprüche**

1.   Windenergieanlage mit einem Windrotor (10), einem davon angetriebenen Generator (12) zur Erzeugung elektrischer Leistung und einer Anschlussleitung (17) zur Abgabe der elektrischen Leistung an ein Netz (9), weiter umfassend ein Eigenbedarfsnetz (3) zur Versorgung elektrisch betriebener Komponenten (8) der Windenergieanlage, und einer Eigenbedarfssteuerung (4) zur Steuerung der Spannung im Eigenbedarfsnetz (3), wobei die Eigenbedarfssteuerung (4) eine Umschalteinrichtung (5) umfasst, die dazu ausgebildet ist zwischen einer Normalversorgung, die an die Anschlussleitung (17) angeschlossen ist, und einer Störfallversorgung umzuschalten, **dadurch gekennzeichnet, dass** die Störfallversorgung mit einer gegenüber der Normalversorgung reduzierten Spannung speist, wobei ein Transformator (2) zur Versorgung des Eigenbedarfsnetzes (3) vorgesehen ist, wobei die Umschalteinrichtung (5) in Doppelkonfiguration ein aktives Schaltelement, das als ein zuschaltendes Glied (52) fungiert, und eine Induktivität als ein wegschaltendes Glied (51) aufweist, das als ein passives Bauelement ausgeführt ist, wobei im Normalbetrieb das zuschaltende Glied (52) abgeschaltet ist und Leistungsfluss über das passive Bauelement erfolgt, und wobei der Störbetrieb ein Überspannungsstörfall ist und das zuschaltende Glied (51) eingeschaltet ist und das passive Bauelement parallel zum Transformator (2) geschaltet ist.

2.   Windenergieanlage nach Anspruch 1, **dadurch gekennzeichnet, dass** das passive Bauelement eine Drossel (54) ist.

3.   Windenergieanlage nach Anspruch 1, **dadurch gekennzeichnet, dass** der Transformator (2) als ein Drosseltransformator (2') ausgeführt ist.

4.   Windenergieanlage nach einem der vorangehenden Ansprüche, **dadurch gekennzeichnet, dass** das aktive Schaltelement (52) im Steuerkreis des Transformators (2) angeordnet ist.

**5.** Windenergieanlage nach Anspruch 3, **dadurch gekennzeichnet, dass** das aktive Schaltelement (52) zum Schalten auf ein Neutralleiter-Niveau ausgebildet ist.

**6.** Windenergieanlage nach Anspruch 3, **dadurch gekennzeichnet, dass** in einem Mehrphasensystem die aktiven Schaltelemente (52) zu einer Sternschaltung auf einen Sternpunkt oder zu einer Dreiecksschaltung ausgebildet sind.

**7.** Windenergieanlage nach einem der vorangehenden Ansprüche, **dadurch gekennzeichnet, dass** das aktive Schaltelement (52) als ein Thyristor-Schalter ausgeführt ist.

**8.** Windenergieanlage nach einem der vorangehenden Ansprüche, **dadurch gekennzeichnet, dass** das aktive Schaltelement zum mehrphasigen Schalten ausgeführt ist, wobei die Zahl der aktiven Schaltelemente kleiner ist als die doppelte Zahl der Phasen.

**9.** Windenergieanlage nach einem der vorangegangenen Ansprüche, **dadurch gekennzeichnet, dass** ein Modul zur Messung der Spannung am Netz (9) vorgesehen ist, welches eine Spannungsmessung auf Zeigerbasis ausführt.

**10.** Eigenbedarfssteuerung zur Steuerung der Spannung in einem Eigenbedarfsnetz (3), das zur Versorgung elektrisch betriebener Komponenten (8) einer Windenergieanlage (1) ausgebildet ist, die einen Windrotor (10), einen davon angetriebenen Generator (12) zur Erzeugung elektrischer Leistung und eine Anschlussleitung (17) zur Abgabe der elektrischen Leistung an ein Netz (9) umfasst, wobei die Eigenbedarfssteuerung (4) eine Umschalteinrichtung (5) umfasst, die dazu ausgebildet ist zwischen einer Normalversorgung, die an die Anschlussleitung (17) angeschlossen ist, und einer Störfallversorgung umzuschalten, **dadurch gekennzeichnet, dass** die Störfallversorgung mit einer gegenüber der Normalversorgung reduzierten Spannung speist, wobei ein Transformator (2) zur Versorgung des Eigenbedarfsnetzes (3) vorgesehen ist, wobei die Umschalteinrichtung (5) in Doppelkonfiguration ein aktives Schaltelement, das als ein zuschaltendes Glied (52) fungiert, und eine Induktivität als ein wegschaltendes Glied (51) aufweist, das als ein passives Bauelement ausgeführt ist, wobei im Normalbetrieb das zuschaltende Glied (52) abgeschaltet ist und Leistungsfluss über das passive Bauelement erfolgt, und wobei der Störbetrieb ein Überspannungsstörfall ist und das zuschaltende Glied (51) eingeschaltet ist und das passive Bauelement parallel zum Transformator (2) geschaltet ist.

**11.** Eigenbedarfssteuerung nach Anspruch 10, **dadurch gekennzeichnet, dass** sie und das Eigenbedarfsnetz (3) nach einem der Ansprüche 2 bis 9 weitergebildet sind.

**Claims**

**1.** Wind turbine having a wind rotor (10), a generator (12), driven thereby, for generating electrical power and a connecting line (17) for delivering the electrical power to a grid (9), further comprising an on-site power grid (3) for supplying power to electrically operated components (8) of the wind turbine, and an on-site power controller (4) for controlling the voltage in the on-site power grid (3), the on-site power controller (4) comprising a changeover apparatus (5) designed to change over between a normal supply, which is connected to the connecting line (17), and a fault supply,
**characterized in that**
the fault supply supplies a reduced voltage in comparison with the normal supply, there being provision for a transformer (2) for supplying power to the on-site power grid (3), the changeover apparatus (5) having, in a dual configuration, an active switching element, which acts as a connecting member (52), and an inductance as a disconnecting member (51), which is embodied as a passive device, wherein in the normal mode the connecting member (52) is switched off and power flows via the passive device, and wherein the fault mode is an overvoltage fault and the connecting member (51) is switched on and the passive device is connected in parallel with the transformer (2).

**2.** Wind turbine according to Claim 1, **characterized in that** the passive device is an inductor (54).

**3.** Wind turbine according to Claim 1, **characterized in that** the transformer (2) is embodied as a constant-current transformer (2').

**4.** Wind turbine according to one of the preceding claims, **characterized in that** the active switching element (52) is arranged in the control circuit of the transformer (2).

**5.** Wind turbine according to Claim 3, **characterized in that** the active switching element (52) is designed to switch to a neutral-conductor level.

**6.** Wind turbine according to Claim 3, **characterized in that** in a polyphase system the active switching elements (52) are designed for a star connection to a star point or for a delta connection.

**7.** Wind turbine according to one of the preceding claims, **characterized in that** the active switching element (52) is embodied as a thyristor switch.

8. Wind turbine according to one of the preceding claims, **characterized in that** the active switching element is designed for polyphase switching, the number of active switching elements being smaller than twice the number of phases.

9. Wind turbine according to one of the preceding claims, **characterized in that** there is provision for a module for measuring the voltage across the grid (9) that performs a voltage measurement on a vector basis.

10. On-site power controller for controlling the voltage in an on-site power grid (3) designed to supply power to electrically operated components (8) of a wind turbine (1) that comprises a wind rotor (10), a generator (12), driven thereby, for generating electrical power and a connecting line (17) for delivering the electrical power to a grid (9), the on-site power controller (4) comprising a changeover apparatus (5) designed to change over between a normal supply, which is connected to the connecting line (17), and a fault supply, **characterized in that**
the fault supply supplies a reduced voltage in comparison with the normal supply, there being provision for a transformer (2) for supplying power to the on-site power grid (3), the changeover apparatus (5) having, in a dual configuration, an active switching element, which acts as a connecting member (52), and an inductance as a disconnecting member (51), which is embodied as a passive device, wherein in the normal mode the connecting member (52) is switched off and power flows via the passive device, and wherein the fault mode is an overvoltage fault and the connecting member (51) is switched on and the passive device is connected in parallel with the transformer (2).

11. On-site power controller according to Claim 10, **characterized in that** it and the on-site power grid (3) are developed according to one of Claims 2 to 9.

## Revendications

1. Eolienne, comprenant un rotor éolien (10), un générateur (12) entraîné par celui-ci pour générer de la puissance électrique et une ligne de raccordement (17) pour débiter la puissance électrique à un réseau (9), comprenant en outre un réseau auxiliaire (3) pour alimenter des composants électriques (8) de l'éolienne, et une commande auxiliaire (4) pour commander la tension dans le réseau auxiliaire (3), dans laquelle la commande auxiliaire (4) comprend un dispositif de commutation (5) qui est réalisé pour commuter entre une alimentation ordinaire, qui est raccordée à la ligne de raccordement (17), et une alimentation en cas de défaillance,
**caractérisée en ce que** l'alimentation en cas de défaillance fonctionne avec une tension réduite par rapport à l'alimentation ordinaire, dans laquelle un transformateur (2) est prévu pour alimenter le réseau auxiliaire (3), dans laquelle le dispositif de commutation (5) en configuration double présente un élément de commutation actif qui sert d'élément de mise en circuit (52), et une inductance en tant qu'élément de mise hors circuit (51) qui est réalisé en tant que composant passif, dans laquelle en fonctionnement normal, l'élément de mise en circuit (52) est hors tension et un flux de puissance passe par le composant passif, et dans laquelle le fonctionnement de secours est une défaillance par surtension et l'élément de mise en circuit (51) est sous tension, et le composant passif est connecté en parallèle au transformateur (2).

2. Eolienne selon la revendication 1, **caractérisée en ce que** le composant passif est une bobine d'induction (54).

3. Eolienne selon la revendication 1, **caractérisée en ce que** le transformateur (2) est réalisé en tant que transformateur à courant constant (2').

4. Eolienne selon l'une quelconque des revendications précédentes, **caractérisée en ce que** l'élément de commutation actif (52) est disposé dans le circuit de commande du transformateur (2).

5. Eolienne selon la revendication 3, **caractérisée en ce que** l'élément de commutation actif (52) est réalisé pour commuter sur un niveau de conducteur neutre.

6. Eolienne selon la revendication 3, **caractérisée en ce que** dans un système polyphasé, les éléments de commutation actifs (52) sont réalisés selon une connexion en étoile vers un point neutre ou selon une connexion en triangle.

7. Eolienne selon l'une quelconque des revendications précédentes, **caractérisée en ce que** l'élément de commutation actif (52) est réalisé en tant que commutateur à thyristor.

8. Eolienne selon l'une quelconque des revendications précédentes, **caractérisée en ce que** l'élément de commutation actif est réalisé pour une commutation polyphasée, dans laquelle le nombre des éléments de commutation actifs est inférieur au double des phases.

9. Eolienne selon l'une quelconque des revendications précédentes, **caractérisée en ce qu'**un module est prévu pour mesurer la tension au niveau du réseau (9) et qui effectue une mesure de tension à base de pointeur.

10. Commande auxiliaire permettant de commander la tension dans un réseau auxiliaire (3) qui est réalisé pour alimenter des composants électriques (8) d'une éolienne (1) qui comprend un rotor éolien (10), un générateur (12) entraîné par celui-ci pour générer de la puissance électrique et une ligne de raccordement (17) pour débiter la puissance électrique à un réseau (9), dans laquelle la commande auxiliaire (4) comprend un dispositif de commutation (5) qui est réalisé pour commuter entre une alimentation ordinaire qui est raccordée à la ligne de raccordement (17) et une alimentation en cas de défaillance, **caractérisée en ce que** l'alimentation en cas de défaillance fonctionne avec une tension réduite par rapport à l'alimentation ordinaire, dans laquelle un transformateur (2) est prévu pour alimenter le réseau auxiliaire (3), dans laquelle le dispositif de commutation (5) en configuration double présente un élément de commutation actif qui sert d'élément de mise sous circuit (52), et une inductance en tant qu'élément de mise hors circuit (51) qui est réalisé en tant que composant passif, dans laquelle en fonctionnement normal, l'élément de mise en circuit (52) est hors tension et un flux de puissance passe par le composant passif, et dans laquelle le fonctionnement en cas de défaillance est une défaillance par surtension et l'élément de mise en circuit (51) est sous tension, et le composant passif est connecté en parallèle au transformateur (2).

11. Commande auxiliaire selon la revendication 10, **caractérisée en ce que** celle-ci et le réseau auxiliaire (3) sont perfectionnés selon l'une quelconque des revendications 2 à 9.

Fig. 1

Fig. 2

Fig. 3

a)   b)

Fig. 4

Fig. 5

Fig. 6

a)    b)    c)

Fig. 7

EP 3 125 401 B1

Fig. 8

Fig. 8

Fig. 9

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013206241 A1
- US 2009021963 A1